Europäisches Patentamt

**European Patent Office**

**Office européen des brevets**

(11) Publication number: **0 415 104 A1**

# EUROPEAN PATENT APPLICATION

(21) Application number: 90114668.8

(22) Date of filing: **31.07.90**

(51) Int. Cl.⁵: **D01G 11/00**

(30) Priority: **23.08.89 IT 8563789**

(43) Date of publication of application:
**06.03.91 Bulletin 91/10**

(84) Designated Contracting States:
**AT BE DE ES FR GB GR IT**

(71) Applicant: **GASPAROTTO, Giuseppe**
**Via Roi, 97**
**I-36031 Dueville(IT)**

(72) Inventor: **GASPAROTTO, Giuseppe**
**Via Roi, 97**
**I-36031 Dueville(IT)**

(74) Representative: **Bonini, Ercole**
**c/o STUDIO ING. E. Bonini SAS 8 Corso**
**Fogazzaro**
**I-36100 Vicenza(IT)**

(54) **System for fastening the staves on the cylinders of picking machines.**

(57) The invention discloses a system for the fastening of needleholding staves (4) on the cylinders (1) of picking machines, in which each of said staves is fixed to the surface (2) of the cylinder (1) because of the inter-action of the stave with at least two fixed small blocks (6), with sides having such a geometry as to match the sides of the stave and because of the interaction of at least two movable small blocks (13), their slanted sides being parallel to the sides of the stave, which are connected through screws (15) to the fixed small blocks (6) and whose sides exert a pressure in the normal direction against the side of the staves (4) with which they are in contact.

FIG.4

EP 0 415 104 A1

## SYSTEM FOR FASTENING THE STAVES ON THE CYLINDERS OF PICKING MACHINES

The invention concerns a system for fastening the staves on the cylinders of picking machines.

It is a known fact that the picking machines in the textile industry, are machines which create the grinding of rags, waste or textile by-products so as to salvage material which is suited to be re-utilized in the manufacturing of further textile products.

The picking machines consist of a series of rollers presenting a multitude of metal needles acting on the textile material to be ground, which is conveyed through the rollers by a tape which is practically tangent to them.

The grinding is the successive operation performed by said series of rollers, which are positioned cascade-like and wherein the density of the needles increases gradually, as the grinding operation progresses .

Each roller presents a multitude of metal needles, which are arranged radially and are fixed on needle-holding staves, which are elements positioned side by side along the generating lines of the cylindric surface of the cylinder.

After a certain number of working hours it is necessary to replace the worn needles with new ones and therefore to remove from the cylinder of the picking machine the staves supporting the worn needles and to replace them with staves presenting new needles.

At the moment the replacement of said staves is a difficult operation which involves a high expenditure of labour.

This is due to the fact that the fastening of the staves on the cylinder surface, is obtained, according to the known technique, through a series of bolts which go through the thickness of the stave and of the underlying plate, constituting the surface of the stave-supporting cylinder.

The bolts are blocked by nuts which are positioned in the interior of the cylinder hollow surface of the picking machines.

It can be understood that the removal of a stave involves the unscrewing of the nuts from the bolts, said nuts being in the inner surface of the cylinder.

Since the length of the cylinders of the picking machines can vary from 500 to 2000 mm., it can be understood why the unscrewing of the bolts' nuts is a long and difficult operation. In fact the access to the nuts is difficult because of the narrow place at disposal and also because the cylinders present laterally some plate protections which have to be removed.

The purpose of the present invention is to eliminate said inconveniences through the realization of a system for the fastening of the staves on the cylinders for picking machines so that the replacement of the staves for the maintenance of the picking needles can be easy and immediate.

Another purpose of the present invention is that the fastening of said staves can guarantee an absolute safety of the locking of the stave to the cylinder while the machine is in operation.

A further purpose of the invention is for the fastening system not to increase the spaces between the sets of needles.

All these purposes and others which will be better explained later are reached by a fastening system for needle-supporting staves on cylinders of picking machines which, according to the patent claims, is characterized in that each of said staves is fixed on the surface of the cylinder through the interaction of the stave with at least two fixed small blocks, which are parallel to the staves and are connected to this cylindric surface and with sides having such a geometry as to create a gain connection on the sides of the stave, and then through the interaction of at least two movable small blocks with oblique sides which are parallel to the sides of the stave, being connected through screws to the fixed small blocks and exercising a pressure against each stave in the normal direction to the mutual contact side.

Advantageously, according to the invention, a plurality of small blocks is fixed on the cylindric surface of the picking cylinder, each of them presenting at least a partial cylindric surface, which is connected with the portion of the cylinder surface and with two sides having the same outline which are suited to create a groove-and-tongue joint.

According to an advantageous embodiment of the invention, the sides of the fixed small blocks are slanted, so that two adjacent fixed small blocks create a dovetail for the fixing of a stave between them.

The further blocking of the same stave in the radial direction is obtained through one or more movable small blocks, which present slanting sides so as to match the corresponding sides of the stave. Said movable small blocks are fixed through a lag screw passing through the thickness of the fixed small blocks and of the cylinder plate , which, therefore, can be easily removed, by acting on the screws from the exterior.

The advantage obtained with the invention can be easily understood.

In fact, during the construction of the picking cylinder, after a plurality of fixed small blocks has been connected with nuts, which are fixed on the inner surface of the cylinder through screws or bolts, the staves are inserted along the dovetail, which has been created between two fixed adjacent small blocks of each stave presenting equally slanting sides.

The final blocking of the stave is created through one or more movable small blocks which press against the sides of two adjacent staves and which are fixed to the fixed small blocks and to the cylinder plate by means of lag screws.

As the tightening torque of the anchor bolts increases, naturally the locking pressure of said movable small blocks against the staves increases, too.

When it is necessary to replace one or more staves, it is sufficient to unscrew the screws of the small blocks, to remove them and to easily withdraw the stave from its locking slot.

Since said screws are placed on the external surface of the cylinder, the advantage of the system of the invention, as compared to the known technique can be easily understood.

Further scope of applicability of the present invention will become apparent from the detailed description, given hereinafter. However, it should be understood that the detailed description and specific example, while indicating a preferred embodiment of the invention, are given by way of illustration only, since various changes and modifications within the spirit and scope of the invention will become apparent to those skilled in the art from this detailed description and from the drawings, wherein:

- Fig.1 represents a picking cylinder with the staves which are fixed according to the system of the invention;

- Fig. 2 is a perspective view of a fixed small block which is blocked on the cylindric surface of the cylinder;

- Fig.3 is a cross-section view of the system for the fastening of the small blocks which have been fixed on the cylinder;

- Fig.4 shows in a cross-section the fastening system of the invention, showing in detail the fixed small blocks, the movable small blocks and the staves.

- Fig.5 is an enlarged detail of Fig.4.

As can be observed in said figures, the picking cylinder, indicated as a whole with 1, presents a shaft 3 supporting said cylinder and a tubular cylindric surface 2 presenting on its external surface a series of staves 4, each of them supporting a plurality of needles 5 which are fixed to the stave.

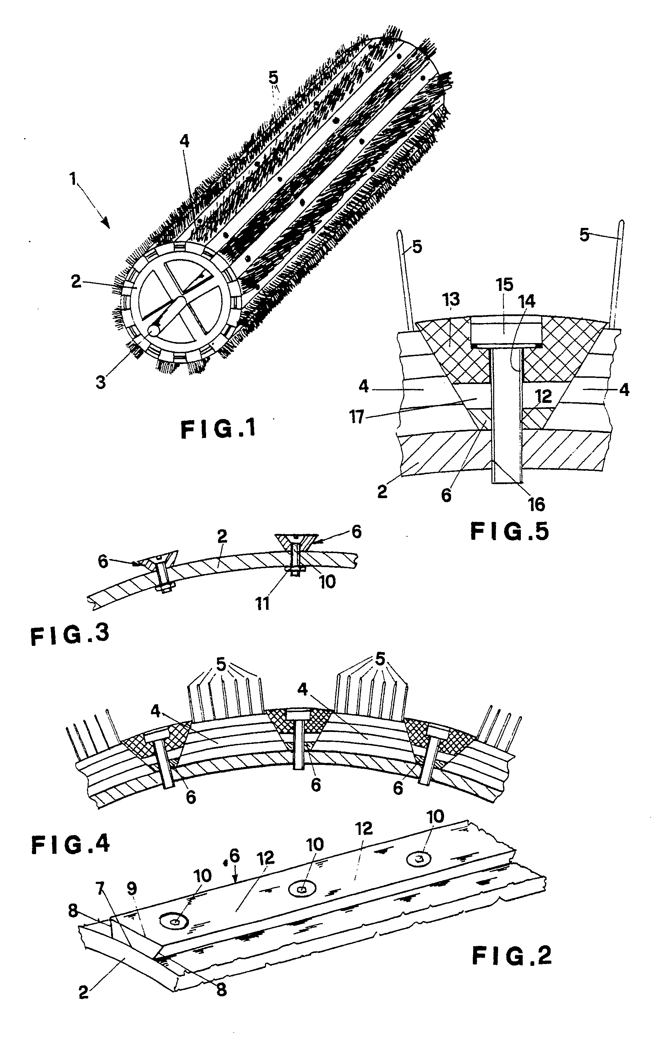

As can be observed in Fig.3 the external cylindric surface 2 of the cylinder 1 presents a plurality of small blocks, indicated as a whole with 6, presenting, in said example, a partially cylindric surface 7 which has the same curved outline as the surface 2 of the cylinder 1.

Moreover, the movable small block 6 presents two slanting lateral sides 8.

Each fixed small block 6 is blocked to the cylindric surface 2 through the bolts 10, which are well visible in Fig.3, their nuts 11 being blocked on the interior of the cylindric surface 2.

The screw-head of the bolts 10, in the case of the example, is preferably a flathead hexagonal embedded screw and it does not protrude from the upper surface 9 of the fixed small block 6. Moreover, the fixed small block 6 presents two threaded through holes, which, as will be described later, serve the purpose of anchoring the movable small blocks which hold the staves 4 in position.

It can be understood that two adjacent fixed small blocks 6, and more specifically the two slanting sides 8, belonging to two adjacent fixed small blocks 6, create a dovetail slot, into which is inserted the stave 4, having its lateral sides slanted by the same angle as the angle of the inclination of the surfaces 8 of the small blocks, so that they match each other.

The staves 4 are made of laminated wood or of another material and present on their external surface a series of needles 5 which are radially arranged.

A movable small block 13 is stuck between two adjacent staves 4, in order to definitely block the staves 4, which are inserted in the dovetail slots, defined by fixed small blocks 6.

The movable small block presents two through-holes 14, each of which receives a screw 15, which is tightened in the threaded holes 12 of the fixed small blocks 6, as can be observed in the Figs.4 and 5.

As can be observed in Fig. 5, the screw 15 not only fits into the threaded hole 12 of the fixed small block 6, but also it engages the correspondent threaded through- hole, belonging to the surface 2, and which is indicated with 16.

It can be easily understood that the tightening of the screw 15 causes the radial approach of the movable small block 13 towards the centre of the cylinder and therefore the blocking pressure is exerted on the slanted sides of two adjacent staves 4 which are in contact with the movable small block 13.

The presence of an empty space 17 between the movable small block 13 and the fixed small block 6, insures the approach of the movable small block 13 during the tightening of the screws 15.

The complete and safe blocking of the staves 4 on the cylindric surface 2 of the cylinder 1 is therefore obtained.

In fact said staves are blocked at the base by a dovetail guiding slot which is formed by the sides of the two adjacent fixed small blocks 6, and are also blocked by the pressure against the lateral sides, which is created by the movable small block , when it is blocked in the radial direction.

It can be understood how easy it is to change the staves 6 when these need to be replaced, since the replacement is carried out simply by unscrewing the screws 15, by removing the movable small block 13 and by making the stave 4 slide along the dovetail guiding slot.

The system for fastening of the invention reaches all the proposed purposes in a simply and inexpensive way.

During the execution phase it is possible to modify the construction of the cylinders on which the system for fastening of the invention is applied, without exceeding the scope of the present invention, as described by the following claims.

## Claims

1) A system for fastening the needleholder staves (4) on the cylinders (1) of picking machines, where each of said cylinders (1) includes:
- an internally concave cylinder (1), which is supported by a shaft (3) driven by a motor or by equivalent means;
- a plurality of staves (4) which are placed on the generating lines of said cylinder and presenting radial needles (5) which are suited to perform the picking, called staves because they are uniformly distributed and removable from said cylinder, characterized in that each stave is fixed to the surface (2) of the cylinder (1) because of the interaction of the stave (4) with at least two fixed small blocks (6), which are parallel to the stave, connected to said cylindrical surface and with sides having such a geometry as to create a gain connection on the stave sides, and because of the interaction of at least two movable small blocks (13), with slanting sides which are parallel to the stave sides and connected with the fixed small blocks (6) through screws (15) and which exert a pressure against each stave (4), in the normal direction against the side with which it is in contact.

2) A system for fastening according to claim 1, characterized in that each fixed small block (6) presents at least a partially cylindric surface (7) with its main axis of symmetry which is parallel to one of the generating lines of the cylinder, and two sides (8) having the same outline suited to realize a gain connection, each fixed small block being fixed to the cylinder through screws (10) or equivalent means and presenting two or more threaded holes (12) suited to receive the screws (15) of the movable small blocks (13) which press against the staves.

3) A system for fastening according to claim 1, characterized in that the fixed small blocks whose sides (8) form a dovetail guiding slot matching the sides of each stave.

4) A system for fastening according to claim 1, characterized in that each movable small block (13) presents sides which are slanted so as to match the corresponding slanted sides of the staves (4), said small block pressing the stave through the tightening of screws (15) into the corresponding threaded holes (12), which are present in each fixed small block.

5) A system for fastening according to claim 4, characterized in that the screws of the movable small block which are tightened in the fixed small block penetrate into corresponding holes (16), which are present in the surface of the cylinder.

6) A cylinder for picking machines, characterized in that it has some staves (4) holding the needles (5) and being fixed to said cylinder by means of the system for fastening according to any of the preceding claim.

**FIG.1**

**FIG.5**

**FIG.3**

**FIG.4**

**FIG.2**

European
Patent Office

EUROPEAN SEARCH
REPORT

Application Number

EP 90 11 4668

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 449 144 (CHRISTOPH BURCKHARDT AG) <br> * page 3-4; figures 1-3 * | 1,2,3 | D 01 G 11/00 |
| Y | DE-C-5 275 90 (LANGER,E.) <br> * the whole document * | 1,2,3 | |
| A | EP-A-0 307 326 (CONSTRUCTIONS MECANIQUES F.LAROCHE & FILS) <br> * column 4-5; figures 1-5 * | 1,2,4 | |
| A | DE-C-5 287 4 (WILKINSON,F.) | | |
| A | BE-A-4 375 61 (STEINBERG,CL.ET AL) | | |

TECHNICAL FIELDS
SEARCHED (Int. Cl.5)

D 01 G

The present search report has been drawn up for all claims

| Place of search | Date of completion of search | Examiner |
|---|---|---|
| The Hague | 12 December 90 | MUNZER E. |